# EUROPÄISCHE PATENTSCHRIFT

(11) **EP 1 032 770 B1**
(45) Veröffentlichungstag und Bekanntmachung des Hinweises auf die Patenterteilung: **02.04.2003**
(21) Anmeldenummer: 98966500.5
(22) Anmeldetag: 26.11.1998
(51) Int. Cl.: F16D 65/00

(54) **BAINITISCH GEHÄRTETE BREMSSCHEIBE**
BAINITICALLY HARDENED BRAKE DISK
DISQUE DE FREIN A DURCISSEMENT BAINITIQUE

(30) Priorität: 29.11.1997 DE 19753116
(43) Veröffentlichungstag der Anmeldung: 06.09.2000
(73) Patentinhaber: ACTech GmbH Advanced Casting Technologies Giessereitechnologie, 09599 Freiberg (DE)
(72) Erfinder: WENDT, Florian, D-09599 Freiberg (DE)
(74) Vertreter: Borchard, Wolfgang
(86) Internationale Anmeldenummer: DE9803507
(87) Internationale Veröffentlichungsnummer: WO99028641

(56) Entgegenhaltungen:
- EP-A- 0 074 624
- WO-A-97/40285
- DE-A- 3 636 120
- US-A- 5 603 784
- KOVACS ET AL.: "Bainitisches Gußeisen mit Lamellengraphit (AGI) - Hohe Festigkeit und Dämpfungsfähigkeit" KONSTRUIEREN UND GIESSEN, Bd. 19, 1994, XP002104028 Düsseldorf DE in der Anmeldung erwähnt
- PATENT ABSTRACTS OF JAPAN vol. 014, no. 378 (M-1011), 15. August 1990 & JP 02 138527 A (HITACHI METALS), 28. Mai 1990

## Beschreibung

Die Erfindung betrifft eine bainitisch gehärtete Bremsscheibe mit mindestens einem durch Gießen hergestellten ringscheibenförmigen Scheibenkörper, mit einem radial außenliegenden, in Kontakt mit Bremsbacken stehenden Bremsringabschnitt, welche zum Bremsen gemeinsam mit einem Fahrzeugrad auf einer Radnabe angeordnet ist.

Fahrzeugräder von Kraftfahrzeugen weisen in aller Regel einen Radkörper mit der Radfelge zur Bettung der Reifen und eine formstabile Radschüssel auf, die zentrisch mit Radschrauben an dem Flansch einer Radnabe angeschraubt ist. Die Radnabe dient der Radlagerung und ist auf der Vorderachse beziehungsweise der Hinterachse gelagert. Zum Abbremsen der Fahrzeugräder wird außerdem an der Radnabe eine Bremstrommel oder Bremsscheibe von Scheibenbremsanlagen lösbar befestigt. Bei modernen Personenkraftwagen haben sich Scheibenbremsanlagen durchgesetzt, die eine hohe Bremswirkung entwickeln und infolgedessen einem hohen Verschleiß ausgesetzt sind. Aus diesem Grunde müssen verschlissene Bremsscheiben innerhalb der Nutzungsdauer eines Kraftfahrzeuges mehrmals ausgewechselt werden. Wenn das Auswechseln der Bremsscheibe bei geringem Aufwand erfolgen und ohne Demontage der Radnabe erfolgen soll, wird zum Befestigen der Radschüssel mit der Bremsscheibe ein und demselben Flansch der Radnabe verwendet. Infolgedessen besitzen die Bremsscheiben einen hutförmigen Aufbau mit einen Bremstopf, der einen nicht unwesentlichen Gewichtsanteil der Bremsanlage einschließt.

Um die Demontage von Scheibenbremsanlagen zu vereinfachen, wurden bereits geteilte Bremsscheiben vorgeschlagen, bei denen ein verschlissener Reibring separat austauschbar ist. Bekannt ist aus der DE 195 28 434 A1 eine Bremsscheibe, die sich aus einem Reibring, stiftförmigen Verbindungsgliedern und einem radnabenförmigen Tragteil zusammensetzt. Die Verbindungsglieder sind über einen Klemmring am Tragteil mit Hilfe der Radschrauben befestigt. Die Bremsscheibe setzt sich in ihrer Gesamtheit aus dem Tragteil, einem innenbelüfteten Reibring sowie fünf Verbindungsgliedern zusammen, die durch einen Zentrierring zentriert werden. Die Verbindungsglieder werden aus unterschiedlichem Material gefertigt. Dadurch können die beim Einsatz von Gußteilen entstehenden Vorteile nicht uneingeschränkt in Erscheinung treten.

Bei einer in der DE 195 22 677 C beschriebenen, aus einem flachen Ring bestehenden und an der Radnabe befestigten Bremsscheibe sollen die bei der Herstellung auftretenden fertigungstechnischen Probleme durch eine aus Aluminium erzeugte Nabe beseitigt werden. Die Befestigung erfolgt auch dabei durch mindestens fünf in Ausnehmungen der Bremsscheibe eingreifende Bolzen, die zur Gewichtsersparnis hohl ausgeführt sind. Die Bolzen sind über einen Teil ihres Außenumfangs mit einer Rändelung versehen und formschlüssig in Bohrungen der Nabe eingesetzt. Bekannt ist, daß formschlüssige Verbindungselemente stark temperaturempfindlich und aus diesem Grunde vor zu hoher Erwärmung zu schützen sind. Bei einer aus Aluminium gefertigten Nabe ist daher eine schwimmende Lagerung der Bremsscheibe auf der Nabe vorzusehen, damit die beim Bremsen in der Bremsscheibe erzeugte Bremswärme nicht auf die Nabe übergreifen kann. Durch eine schwimmende Lagerung soll eine möglichst gute thermische Trennung zwischen der Bremsscheibe und der Radnabe gewährleistet werden.

Wegen der thermischen Empfindlichkeit von Aluminium sind im Kraftfahrzeugbau bereits enorme Bemühungen unternommen worden, um die aus Aluminium gefertigten Bauteile durch Gußteile aus Grauguß zu ersetzen. Bei Bauteilen im Kraftfahrzeugbau, die durch erhöhte Temperaturen beansprucht werden, ist das Warmfestigkeitsverhalten von ganz besonderer Bedeutung. Gußeisen bietet gegenüber Aluminium eine höhere Festigkeit und Ermüdungsfestigkeit bei höheren Temperaturen sowie eine hohe Widerstandsfähigkeit gegen Warmrisse, eine höhere Steifigkeit und Verschleißbeständigkeit bei ebenfalls noch guter Wärmeleitfähigkeit. Insbesondere bietet Gußeisen hervorragende Dämpfungseigenschaften, die vor allem auf dem Anteil von Graphit im Gefüge zurückzuführen sind, wobei die Graphitform in Wechselwirkung mit der metallischen Grundmasse ebenfalls eine Rolle spielt. Aus Gußeisen hergestellte Bremsteile sind dadurch besonders vibrationsarm und komfortabel.

Bremsscheiben für Kraftfahrzeug - Scheibenbremsen, die einen flachen, separat aus Gußeisen hergestellten Reibring aufweisen, können auf verschiedene Art und Weise zusammengebaut werden. In der DE Offenlegungsschrift 42 37 372 besteht die Bremsscheibe aus mindestens drei nebeneinander angeordneten ringförmigen Scheibenteilen, die durch intermittierend angeordnete Nieten mit einem topfförmigen Bremsscheibenträger verbunden sind. Die außenliegenden Scheibenteile sind einstückig aus Grauguß gefertigt. Die innenliegenden Scheibenteile sind als laminiertes Blechpaket mit mindestens zwei aufeinandergeschichteten Blechteilen ausgebildet. Damit soll der Geräuschentwicklung und dem Quietschen beim Bremsen begegnet werden.

In der DE Offenlegungsschrift 43 33 517 besteht eine Bremsscheibe aus einem gußeisernen Scheibenkranz und einem formschlüssig mit diesem verbundenen Innentopf aus einem geeigneten Stahlblech. Der Innentopf und der Scheibenkranz sollen durch Laserschweißung ohne Zusatzwerkstoff zu einem Verbundbauteil miteinander verbunden werden, das einen Innentopf mit einer höheren Zugfestigkeit aufweist. Nach Maßgabe der DE Offenlegungsschrift 195 05 112 kann der aus Gußeisen gefertigte Reibring mit dem für die Befestigung am Fahrzeugrad vorgesehenen topfförmigen Halteteil in Drehrichtung derart formschlüssig verbunden werden, damit eine geringfügige achsparallele Verschiebung möglich ist. Das Halteteil und der Reibring besitzen mäanderförmige Verzahnungen, zwischen denen als Einlegeteil ein mäanderförmiges Metallband angeordnet ist. Beim Vergießen wird durch das Einlegeteil das Verschmelzen von Halteteil and Reibring verhindert. Dadurch soll vermieden werden, daß sich die Bremsscheibe beim Bremsen und bei starker Erwärmung aus der Scheibenebene heraus verbiegt, was zum Rubbeln der Bremse führen kann.

Noch stärker belastete Bremsscheiben bei Schienenfahrzeugen, die durch die Gefahr von Rissen infolge von Wärmespannungen bedroht sind, erhalten nach DE Patentschrift 34 32 501 C2 in gleichmäßiger Winkelteilung radiale Schlitze, welche die Verformungen durch Bremsdehnungen oder Wärmedehnungen aufnehmen können. Bei Scheibenbremsen von Hochgeschwindigkeitszügen können diese Maßnahmen nicht ausreichen, so daß herkömmliche Bremsscheiben aus Gußeisen mit Lamellengraphit oder Kugelgraphit beziehungsweise aus Stahlguß nicht mehr einsetzbar sind, weil die hohe Anzahl und das erhebliche Gewicht ein Problem darstellen. In der DE Patentschrift 44 00 896 wird zur Lösung dieses Problems eine Monoblockscheibe vorgeschlagen, die aus einer verschleißbeständigen Aluminium - Silizium - Basislegierung zusammengesetzt ist. Nachteilig sind die in das Gußgefüge eingebauten Verstärkungselemente, welche die Herstellungskosten verteuern können. Aus diesem Grunde sind derartige Lösungen nicht auf gewöhnliche Bremsanlagen für Kraftfahrzeuge übertragbar. Außerdem sind die schlechteren Warmfestigkeiten bei erhöhten Temperaturen, wie bei fehlender Fahrtwindkühlung zum Beispiel bei langsamer Bergabfahrt, nachteilig fiir den Einsatz im Straßenfahrzeug.

Für hoch beanspruchte Fahrzeugbremsscheiben sind aus den vorgenannten Gründen bereits hochfeste Gußeisensorten vorgeschlagen worden, die unter dem Begriff bainitisches Gußeisen mit Kugelgraphit oder im angelsächsischen Raum unter der Bezeichnung Austempered Ductile Iron ADI zusammengefaßt sind. Wie als bekannt vorausgesetzt werden kann, wird Gußeisen mit Kugelgraphit erzielt, indem man kleine Mengen Mg in das geschmolzene Eisen gibt, was zu einer kugelförmigen Ausbildung des Graphit führt und damit dem Eisen Festigkeit und Zähigkeit gibt. Um die Zähigkeit und Festigkeit weiter zu erhöhen, hat sich als effektivstes Verfahren hierfür das Austempern erwiesen.

In der US Patentschrift 5603 784 wird hierzu ein Verfahren zur Herstellung von Bremstrommeln und Bremsscheibenringen beschrieben, die durch asbestlose Bremsschuhe und Bremsklötze von Scheibenbremsen einem vorzeitigen Verschleiß ausgesetzt sind. Vorgeschlagen werden rotierende Bremsteile aus Graugußeisen, die insbesondere für schwere Transportfahrzeuge geeignet sind. Zuerst wird eine gegossenem Bremstrommel oder Bremsscheibe aus Grauguß mit einem Kohlenstoffgehalt zwischen 3,4 % bis 4 % hergestellt. Nachfolgend wird in einem Austemperungsschritt auf 816 °C - 927 °C aufgeheizt und bei dieser Temperatur gehalten. Anschließend wird in einem Flüssigkeitsbad bei einer Temperatur zwischen 149 °C und 371 °C in einem Zeitraum von 2 - 4 Stunden abgeschreckt. Im dritten Schritt wird eine Retemperung durchgeführt, um eine Mikrostruktur mit sphärischem Perlittkohlenstoff in einer Matrix von bainitischem und austenitischem Eisen zu erhalten. Die dadurch erhaltenen Bremsscheiben besitzen eine ausgezeichnete Abnutzungsfestigkeit.

Bei der Herstellung von Bremsscheiben mit einem durchgehenden, völlig bainitischen oder bainitischen - austenitischen Gefüge sind die schlechteren Zerspanungseigenschaften beim Bohren und der Verzug bei der Bainitvergütung von Nachteil. Außerdem besitzt Gußeisen mit Kugelgraphit nicht die bei Gußeisen mit Lamellengraphit vorhandene, vorteilhaft hohe Dämpfungsfähigkeit.

Zum Vermeiden von Schallemissionen und Schwingungen bezweckt die Erfindung eine aus Gußeisen gefertigte Bremsscheibe, die eine hohe Festigkeit und ein geringes Gewicht aufweist. Insbesondere sollen mit der Erfindung die Nachteile der Verbundkonstruktion einer Bremsscheibe mit einer Radnabe aus Aluminium beseitigt werden.

Erfindungsgemäß wird die Aufgabe dadurch gelöst, daß die Bremsscheibe einen durchgehend bainitisch gehärteten Bremsscheibenkörper aus Gußeisen mit Lamellengraphit (AGI) aufweist. Durch das Bainitisieren werden die Eigenschaften von Gußeisen mit Lamellengraphit erheblich verbessert. Auf diese Weise wird eine sehr hohe Festigkeit, hohe Verschleißbeständigkeit und eine außerordentlich hohe Dämpfungsfähigkeit erreicht, die der Dämpfungsfähigkeit einer Bremsscheibe aus Gußeisen mit Kugelgraphit überlegen ist. Bainitisches Gußeisen mit Lamellengraphit besitzt ein Gefüge, das es verschleißbeständiger macht als hochfestes Gußeisen mit Lamellengraphit, Gußeisen mit Vermiculargraphit oder Gußeisen mit Kugelgraphit im Gußzustand. Obwohl diese Vorteile im Hinblick auf Teile von Bremsen bereits von B. Kovacs, Konstruieren und Gießen, Jahrgang 19 (1994), Nr. 3, Seite 16 ff., genannt worden sind, konnten derartige Bremsscheiben bisher nicht eingesetzt werden. Die Dämpfungsfähigkeit beruht nämlich auf den hohen inneren Spannungen, die bei geringer Korngröße und bei geringer Bainitisierungstemperatur erzeugt werden. Diese Spannungen können bei mechanischer Bearbeitung durch Bohren oder Gewindeschneiden Spannungsrisse hervorrufen. Eine kraftschlüssige Verbindung der Bremsscheibe mit der Nabe scheidet daher aus.

Damit diese Nachteile ausgeschlossen werden, ist des weiteren vorgesehen, daß die Bremsscheibe einstückig durch Verbundgießen der Radnabe mit dem Bremsscheibenkörper unter Ausbildung einer stoffschlüssigen Verbundstelle im Anschlußbereich ausgebildet ist, wobei die Radnabe einen Werkstoff aus Gußeisen, Stahlguß oder umgeformten Stahl mit einer höherwertigen Zugfestigkeit größer als 170 N/mm² aufweist. Durch Verbundgießen steht eine hochfeste Bremsscheibe zur Verfügung, bei welcher das technologisch schwierige Einbringen von Bohrungen und Gewinde in das gehärtete Gefüge entfällt.

Auf diese Weise kann eine hochfeste und verschleißbeständige Bremsscheibe hergestellt werden, bei welcher die Lebensdauer des Bremsscheibenkörpers mindestens gleich groß oder größer als die Lebensdauer der Radnabe ist.

Mit anderen Worten, durch Wegfall des Bremstopfes kann das Gewicht der Bremsscheibe erheblich verringert werden. Infolgedessen kann die Bremsscheibe derart ausgebildet werden, daß bei durchschnittlicher Abnutzung die Einsatzdauer der Bremsscheibe genau so groß wie die Nutzungsdauer des Kraftfahrzeuges ist. In Bezug auf die Wartung der Bremsanlage bei einem Kraftfahrzeug ergeben sich dadurch für den Kraftfahrzeughalter erhebliche Kostenvorteile, weil der Austausch der Bremsscheiben nicht mehr erforderlich ist. Dadurch kann der Aufbau der Bremsanlage und die Radlagerung konstruktiv verbessert und optimiert werden. Bei speziellen Kraftfahrzeugen mit relativ geringer jährlicher Kilometerleistung, zum Beispiel im Stadtwagensegment, können sich dadurch erhebliche Vorteile ergeben.

Die Herstellung einer bainitisch gehärteten Bremsscheibe erfolgt in einem Verbundgießverfahren, bei dem zunächst aus einer Schmelze in einer Gießform ein ringscheibenförmiger Scheibenrohling aus Gußeisen mit Lamellengraphit gegossen wird. Durch Angießen einer aus Gußeisen mit Kugelgraphit bestehenden Radnabe wird dann ein Verbundgußteil hergestellt, welches nach einer spanenden, groben Vorbereitung durch Abdrehen und Auswuchten einer bainitischen Aushärtung unterworfen und nach dem Aushärten einer Nachbearbeitung durch Schleifen des Scheibenteils unterzogen wird. Nach einer Weiterbildung des Verfahren wird eine aus Stahlblech gefertigte Radnabe in eine Gießform eingelegt und durch Angießen eines Scheibenrohlings ein Bremsscheibenrohling hergestellt, bei dem die Radnabe auf Grund der anderen chemischen Zusammensetzung und Gefügestruktur nicht an der bainitischen Aushärtung teilnimmt. Die Radnabe behält dadurch gegenüber dem Bremsscheibenkörper ihre hohe Zugfestigkeit und Zähigkeit.

Außerdem ermöglicht die Erfindung die Herstellung einer bainitisch gehärteten Bremsscheibe mit einer ungehärteten Radnabe aus Kugelgraphit, wobei ein aus Gußeisen mit Lamellengraphit gegossener Scheibenrohling nach einer vorbereitenden Bearbeitung durch Abdrehen und Auswuchten einer bainitischen Aushärtung unterzogen und nachfolgend im Anschlußbereich der Radnabe partiell erwärmt, in eine Gießform eingelegt und im Verbundgießverfahren durch Angießen der aus Gußeisen mit Kugelgraphit bestehenden Radnabe vergossen wird. Hiermit ist eine nachfolgende wirtschaftliche spanabhebende Bearbeitung der Radnabe durch Bohren oder Gewindeschneiden möglich, was im nachfolgenden anhand von Ausführungsbeispielen und mittels Zeichnungen näher erläutert werden soll.
In den dazugehörigen Zeichnungen zeigt
- Figur 1: eine Bremsscheibe mit einem bainitisch gehärteten Bremsscheibenkörper und einer angegossenen Radnabe aus bainitisch gehärtetem Gußeisen mit Kugelgraphit,
- Figur 2: die Gießform zum Verbundgießen der Bremsscheibe nach Figur 1,
- Figur 3: eine Bremsscheibe mit einer Radnabe aus Stahlblech,
- Figur 4: eine Gießform zum Verbundgießen der in Figur 3 gezeigten Bremsscheibe, wobei
- Figur 4a: eine technologisch günstigere Variante von Figur 4 beinhaltet,
- Figur 5: einen gehärteten Bremsscheibenkörper, der mit einer ungehärteten Radnabe aus Kugelgraphit verbundgegossen werden soll und
- Figur 6: eine Gießform zum Verbundgießen der Bremsscheibe nach Figur 5 in schematischer Darstellung

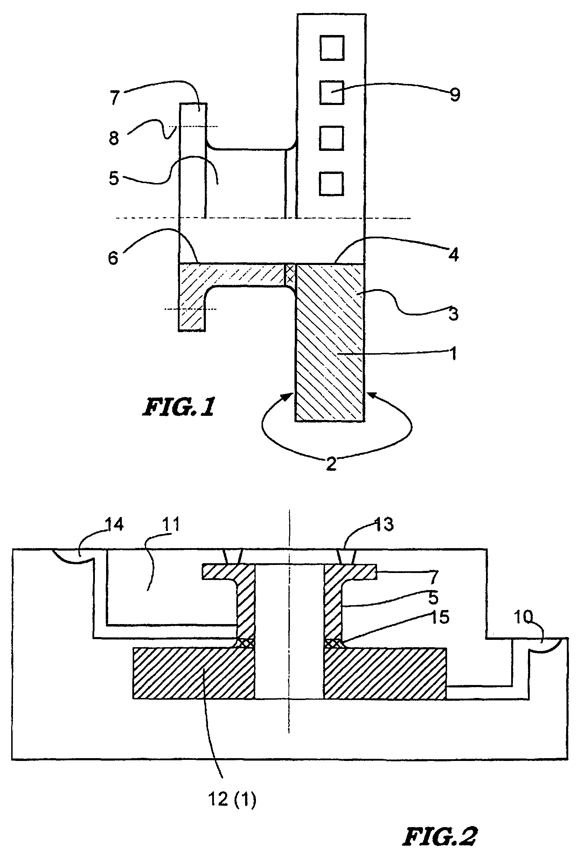

Die Bremsscheibe für Scheibenbremsen in Figur 1 besteht aus einem ringscheibenförmigen Bremsscheibenkörper 1 mit einem radial außenliegenden, mit Bremsbacken in Kontakt stehenden Bremsringabschnitt 2 und einem radial innenliegenden Bremsscheibenfuß 3, der von einer Radnabenbohrung 4 durchgriffen wird. Die Radnabe 5 weist fluchtend eine Nabenbohrung 6 zur Lagerung eines nicht weiter ausgeführten Achsschenkelzapfens einer Vorderachse oder einer Antriebswelle der Hinterachse eines Fahrzeuges auf. Der Bremsscheibenkörper 1 ist auf der Innenseite des Fahrzeuges angeordnet, wobei sich auf der Außenseite der Radnabe 5 der Nabenflansch 7 mit Anschraubbohrungen 8 für das Anschrauben der Radschüssel befindet.

Der Bremsringabschnitt 2 des Bremsscheibenkörpers 1 wird nach Fertigstellung auf beiden Seiten plan geschliffen, wofür eine entsprechende Bearbeitungszugabe erforderlich ist. Zwischen den plan geschliffenen Bremsringabschnitten 2 kann der Bremsscheibenkörper 1 innenbelüftet mit entsprechenden Belüftungskanälen 9 hohl ausgebildet werden, wodurch im Bremsscheibenfuß 3 nicht weiter ausgeführte Belüftungsöffnungen vorgesehen sind. Im Anschlußbereich ist der Bremsscheibenfuß 3 mit der Radnabe 5 auf diese Weise über Stege verbunden, was nach Maßgabe des Standes der Technik bekannt ist.

Zur Herstellung einer bainitisch gehärteten Bremsscheibe wird gemäß Figur 2 in einem Verbundgießverfahren zunächst aus einer Schmelze in einer Gießform 11 ein ringscheibenförmiger Scheibenrohling 12 aus Gußeisen mit Lameltengraphit, gegebenenfalls mit einem Kern für Belüftungskanäle, gegossen.

Dementsprechend wird zuerst über den Anschnitt 10 der Formhohlraum für den Scheibenrohling 12 beziehungsweise Bremsscheibenkörper 1 mit einer ersten Gußeisenschmelze gefüllt, die für einen Gußeisenwerkstoff mit Lamellengraphit vorgesehen ist. Danach wird die Schmelze abgekühlt, bis sich der Gußeisenwerkstoffan der Verbundstelle im Zweiphasengebiet befindet. Über den Speiser 13 wird anschließend ein nichtmetallisches Stoffgemisch in der Schichtdicke zwischen 0,5 und 1,5 mm eingeführt, das in der Hauptsache aus einer borhaltigen Verbindung besteht und das dazu geeignet ist, an der freiliegenden Fläche des Bremsscheibenkörpers 1 bei der Abkühlung entstandene Oxide zu lösen und vor einer weiteren Oxidation durch Verhinderung des Sauerstoffdurchtritts zur Oberfläche zu schützen. Für das nichtmetallische Stoffgemisch kommt eine Zusammensetzung in Frage, die aus 54 % Na₂B₄O₇, 38 % B₂O₃, 4 % K₂ZrF₆ und 4 % SiO₂ hergestellt worden ist. Nach dem Ausbreiten und Einwirken des nichtmetallischen Stoffgemisches auf der Oberfläche wird über den Anschnitt 14 die zweiten Schmelze für die Ausbildung der Radnabe 5 und des Nabenflansches 7 eingegossen. Für dieses Schmelze wird ein Gußeisenwerkstoff mit Kugelgraphit vorgesehen, der eine Zugfestigkeit größer als 170 N/mm² ergibt. Beim Abgießen der zweiten Schmelze darf der Bremsscheibenkörper 1 nur soweit abkühlen und muß die Gießtemperatur derart bemessen sein, daß sich an der Verbundstelle 15 eine Ausgleichstemperatur einstellt, die während einer ausreichend langen Zeitspanne mindestens 10 ° C über der Solidustemperatur eines der Gußeisenwerkstoffe für den Bremsscheibenkörper 1 oder für die Radnabe 5 liegt.

Das heißt, die Gießtemperatur der zweiten Schmelze und die Temperatur des Körpers im Formhohlraum müssen unter Berücksichtigung der konkreten geometrischen Gestaltung und thermischen Eigenschaften des Systems Gußeisenwerkstoff- Bremsscheibenkörper 1 - Gußeisenwerkstoff - Radnabe 5 - Formstoff so aufeinander abgestimmt werden, daß diese Bedingungen erfüllt sind.

Das nichtmetallische Stoffgemisch wird beim Aufgießen des Gußeisenwerkstoffes für die Radnabe 5 von der Verbundstelle 15 verdrängt und aufgrund seiner im Verhältnis zur Schmelze geringeren Dichte auf den Speiser 13 aufgeschwemmt. Auf diese Art und Weise wird eine fehlerfreie Verbundstelle 15 zwischen dem Bremsscheibenkörper 1 und der Radnabe 5 bewerkstelligt, die, auch bei einem abgemagerten Querschnitt der Radnabe 5, eine sichere Übertragung der beim Bremsen und bei Erwärmung auftretenden Kräfte und Momente gewährleisten kann.

Das fertige Verbundgußteil wird nach dem Entformen und dem Abkühlen nach Säuberung des Formsandes einer groben Vorbereitung durch Abdrehen und Auswuchten unterzogen. Das Abdrehen ermöglicht eine wirtschaftliche Herstellung durch eine vergleichsweise große Spantiefe bei ausreichender Standzeit der Werkzeuge. Da die hohen Gieß - und Erstarrungstemperaturen von Gußeisen die Gießformen relativ stark belasten, ist die Oberflächengüte und die Maßgenauigkeit geringer als beim Gießen von Aluminium, weshalb größere Bearbeitungszugaben erforderlich sind. Aus diesem Grunde ist die spanende Bearbeitung im Gußzustand vor dem Aushärten der Bremsscheibe erforderlich.

Die bainitische Aushärtung erfolgt in einer mehrstufigen Wärmebehandlung, bei welcher der vorbereitete Bremsscheibenrohling in der ersten Glühstufe auf eine Temperatur von 780 °C bis 950 °C aufgeheizt und bei dieser Umwandlungstemperatur innerhalb einer vorgegebenen Zeitdauer im Zweiphasengebiet austenitisiert wird. In einer zweiten Glühstufe findet bei einer Zwischenvergütungstemperatur von 240 °C bis 450 °C die Bainitumwandlung in einem Zeitraum von 1 bis 3 Stunden statt. Nach der bainitischen Umwandlung wird in Wasser oder Öl abgeschreckt.

Mit dem auf diese Weise erzeugten Bainit wird aus einem unlegierten oder niedriglegierten Gußeisen mit Lamellengraphit und Kugelgraphit eine Bremsscheibe ermöglicht, die eine ungewöhnlich hohe Festigkeit und Verschleißbeständigkeit aufweist. Im unteren Bereich der genannten Zwischenvergütungstemperaturen entsteht Bainit, der einen harten und hochfesten Werkstoff ergibt, der allerdings eine nicht so hohe Zähigkeit hat. Im oberen Temperaturbereich bildet sich der sogenannte obere Bainit, der weniger fest und hart ist, aber bei guter Zähigkeit noch immer eine hohe Verschleißbeständigkeit aufweist. Durch Variation der Zwischenvergütungstemperatur, der Glühzeit und der chemischen Zusammensetzung des Gußeisens kann demzufolge die Bremsscheibe auf die erwünschten mechanischen Eigenschaften eingestellt werden. Bei einer aus Gußeisen mit Kugelgraphit und Lamellengraphit verbundgegossenen Bremsscheibe wird in der Regel die Zugfestigkeit der Radnabe 5 gegenüber der Verschleißbeständigkeit des Bremsringabschnittes 2 dominieren. Die bainitische Aushärtung der Radnabe 5 wird daher derart ausgeführt, daß die Zugfestigkeit größer als 170 N/mm² ist. Bremsscheiben die eine weniger hohe Verschleißbeständigkeit aufweisen, lassen sich nach dem bainitischen Aushärten besser durch Schleifen bearbeiten, um den beim Bainitisieren entstehenden Verzug zu beseitigen.

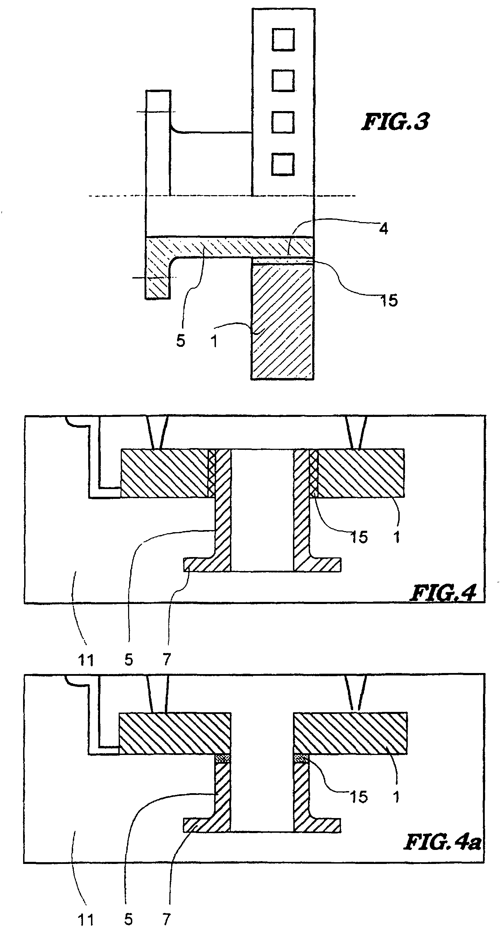

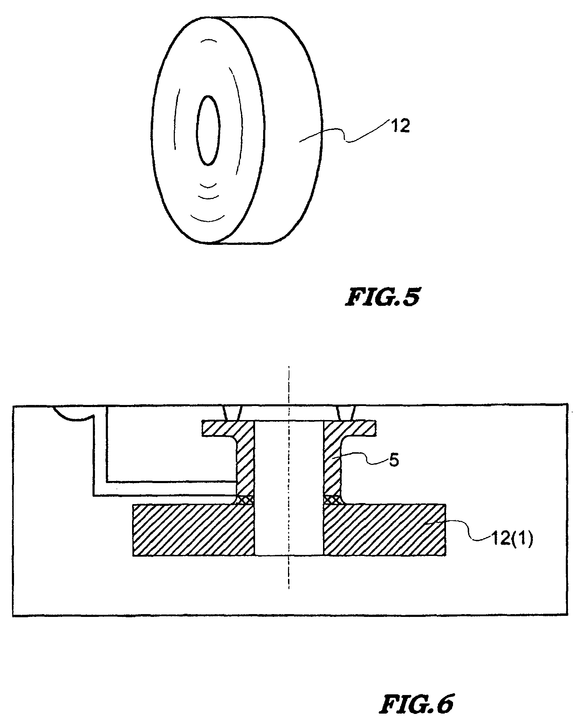

Wenn eine Bremsscheibe mit einer sehr großen Härte und einer hohen Verschleißbeständigkeit hergestellt werden soll, wird gemäß Figur 3 eine Radnabe 5 aus Stahlblech vorgesehen. Die Herstellung der in Figur 3 gezeigten Bremsscheibe erfolgt durch Verbundgießen unter Inanspruchnahme einer in Figur 4 dargestellten Gießform 11, in welche die aus Stahlblech vorgefertigte Radnabe 5 mit dem Nabenflansch 7 eingelegt und mit der zu dem Bremsscheibenkörper 1 gehörenden Schmelze vergossen wird. Damit eine qualitativ einwandfreie stoffschlüssige Verbundstelle 15 bewerkstelligt werden kann, wird in der Beschreibung des Ablaufs des Verfahrens auf die oben beschriebene Herstellung einer Radnabe 5 aus Gußeisen mit Lamellengraphit Bezug genommen Vor dem Abgießen der Schmelze beziehungsweise vor dem Einlegen in die Gießform 11 muß die Radnabe 5 erwärmt und muß die Gießtemperatur derart bemessen sein, daß sich an der Verbundstelle 15 eine Ausgleichstemperatur einstellt, die mindestens 10 ° C über der Solidustemperatur liegt. Dadurch ist der Bremsscheibenkörper 1 einstückig durch Verbundgießen mit der Radnabe 5 unter Ausbildung einer stoffschlüssigen Verbundstelle 15 im Anschlußbereich verbunden. In Figur 4a ist eine technologisch vorteilhafte Variante von Figur 4 dargestellt.

Der verbundgegossene Bremsscheibenrohling kann im Gußzustand einer spanenden Vorbereitung durch Abdrehen und Auswuchten unterzogen, nachfolgend der bainitischen Aushärtung unterworfen und in der Nachbearbeitung geschliffen werden. Die bainitische Aushärtung kann bei einer unteren Zwischenstufenvergütungstemperatur derart erfolgen, daß ein sehr harter und hochverschleißfester Bremsringabschnitt 2 mit einer Lebensdauer ausgebildet wird, die mindestens gleich groß oder größer als die Lebensdauer der Radnabe 5 ist. Dadurch kann eine Bremsscheibe ermöglicht werden, deren Nutzungsdauer bei vergleichsweise durchschnittlicher Abnutzung gleich groß oder größer als die Lebensdauer des Kraftfahrzeuges ist. Diese Vorteile beruhen im wesentlichen darauf, daß für die Radnabe 5 ein Werkstoff gewählt werden kann, der an der bainitischen Aushärtung nicht beteiligt ist.

Eine weitere Möglichkeit der Herstellung einer gehärteten Bremsscheibe, bei welcher nur der Bremsscheibenkörper 1 ein durchgehend gehärtetes bainitisches Gußeisen mit Lamellengraphit (AGI) aufweist, ist dadurch gegeben, daß bei einem in Figur 5 dargestellten Scheibenrohling 12, der bainitisch gehärtet und durch Plandrehen und Auswuchten vorbereitet ist, ein Radnabe 5 aus einer Schmelze angegossen wird. Vor dem Verbundgießen wird der aus Gußeisen mit Lamellengraphit gegossener Scheibenrohling 12 einer bainitischen Aushärtung unterzogen und nachfolgend im Anschlußbereich der Radnabe 5 partiell, zum Beispiel induktiv, erwärmt, in eine in Figur 6 dargestellte Gießform 11 eingelegt oder alternativ bereits in der Gießform liegend, partiell erwärmt und im Verbundgießverfahren durch Angießen der aus Gußeisen mit Kugelgraphit bestehenden Radnabe 5 vergossen. Dadurch wird eine Bremsscheibe ermöglicht, bei welcher die Radnabe 5 im Gußzustand bearbeitet werden kann. Für den Bremsscheibenkörper 1 kann die Bearbeitungszugabe für das Schleifen geringer ausgeführt werden, weil der beim Bainitisieren entstehende Verzug ohne die angegossene Radnabe 5 geringer ist.

## Patentansprüche

1. Bainitisch gehärtete Bremsscheibe mit mindestens einem durch Gießen hergestellten ringscheibenförmigen Scheibenkörper, mit einem radial außenliegenden, in Kontakt mit Bremsbacken stehenden Bremsringabschnitt, welche zum Bremsen gemeinsam mit einem Fahrzeugrad auf einer Radnabe angeordnet ist, **dadurch gekennzeichnet, daß** die Bremsscheibe einen durchgehend bainitisch gehärteten Bremsscheibenkörper (1) aus Gußeisen mit Lamellengraphit ( AGI ) aufweist, wobei die Bremsscheibe einstückig ausgerührt und durch Verbundgießen der Bremsscheibenkörper (1) mit der Radnabe (5) unter Ausbildung einer stoffschlüssigen Verbundstelle (15) im Anschlußbereich der Radnabe (5) mit dem Bremsscheibenfuß (3) verbunden ist.

2. Bainitisch gehärtete Bremsscheibe nach Anspruch 1, **dadurch gekennzeichnet, daß** die Radnabe (5) einen Werkstoff aus Gußeisen, Stahlguß oder umgeformten Stahl mit einer höherwertigen Zugfestigkeit größer als 170 N/mm² aufweist.

3. Bainitisch gehärtete Bremsscheibe nach einem oder mehreren der Ansprüche 1 - 2, **dadurch gekennzeichnet, daß** der Bremsscheibenkörper (1) derart ausgeführt und bei einer unteren Zwischenstufenvergütungstemperatur bainitisch gehärtet ist, daß die Lebensdauer des Bremsscheibenkörpers (1) mindestens gleich groß oder größer als die Lebensdauer der Radnabe (5) ist

4. Bainitisch gehärtete Bremsscheibe nach Anspruch 3, **dadurch gekennzeichnet, daß** die Nutzungsdauer der Bremsscheibe bei vergleichsweise durchschnittlicher Abnutzung gleich groß oder größer als die Lebensdauer des Kraftfahrzeuges ist.

5. Verfahren zur Herstellung einer bainitisch gehärteten Bremsscheibe nach einem oder mehreren der Ansprüche 1 - 4, **dadurch gekennzeichnet, daß** in einem Verbundgießverfahren aus einer Schmelze in einer Gießform (11) ein ringscheibenförmiger Scheibenrohling (12) aus Gußeisen mit Lamellengraphit gegossen und durch Angießen einer aus Gußeisen mit Kugelgraphit bestehenden Radnabe (5) ein Verbundgußteil hergestellt wird, welches nach einer spanenden, groben Vorbereitung durch Abdrehen und Auswuchten einer bainitischen Aushärtung unterworfen und nach dem Aushärten einer Nachbearbeitung vor allem durch Schleifen unterzogen wird.

6. Verfahren zur Herstellung einer bainitisch gehärteten Bremsscheibe nach einem oder mehreren der Ansprüche 1 - 4, **dadurch gekennzeichnet, daß** in einem Verbundgießverfahren eine aus Stahlblech gefertigte Radnabe (5) in eine Gießform 11 eingelegt und durch Angießen eines aus Gußeisen mit Lamellengraphit bestehenden ringscheibenförmigen Scheibenrohlings (12) ein Bremsscheibenrohling hergestellt wird, welcher nach einer spanenden Vorbereitung durch Abdrehen und Auswuchten einer bainitischen Aushärtung unterworfen und nachfolgend der Nachbearbeitung unterzogen wird.

7. Verfahren zur Herstellung einer bainitisch gehärteten Bremsscheibe nach einem oder mehreren der Ansprüche 1 - 4, **dadurch gekennzeichnet, daß** ein aus Gußeisen mit Lamellengraphit gegossener Scheibenrohling (12) nach einer vorbereitenden Bearbeitung durch Abdrehen und Auswuchten einer bainitischen Aushärtung unterzogen und nachfolgend im Anschlußbereich der Radnabe (5) partiell erwärmt, in eine Gießform 11 eingelegt und im Verbundgießverfahren durch Angießen einer aus ungehärtetem Gußeisen mit Kugelgraphit bestehenden Radnabe (5) vergossen wird.

8. Verfahren zur Herstellung einer bainitisch gehärteten Bremsscheibe durch Verbundgießen nach einem Verfahren nach Anspruch 5 - 7, **dadurch gekennzeichnet, daß** die Kontaktfläche der in die Gießform 11 eingelegten Radnabe (5) oder des vorbereiteten Scheibenrohlings (12), welche die Verbundstelle (15) im Anschlußbereich zwischen der Radnabe (5) und dem Bremsscheibenfuß (3) bildet, vor dem Angießen auf eine Temperatur eingestellt wird, die mindestens 10 °C oberhalb der Solidustemperatur liegt, wobei die zum Angießen freiliegende Verbundstelle (15) zuvor mit einem nichtmetallischen Stoffgemisch aus einer reduzierenden und vor einer Oxydation schützenden borhaltigen Verbindung beschichtet wird.

## Revendications

1. Disque de frein à durcissement bainitique, qui comporte au moins un corps en forme de disque fabriqué par moulage présentant des parties annulaires faisant saillie radialement et se trouvant en contact avec des mâchoires de frein, qui, en vue du freinage, est installé sur le moyeu de la roue du véhicule associé **caractérisé en ce que** le disque de frein possède un corps (1) totalement durci de manière bainitique en fonte avec du graphite lamellaire (AGI), le disque étant fabriqué d'un seul tenant et relié par liaison par fusion du corps (1) avec le moyeu (5) de roue, une zone de liaison (15) par matière étant ainsi formée dans la région de connexion du moyeu (5) avec la base du disque (3).

2. Disque de frein à durcissement bainitique selon la revendication 1, **caractérisé en ce que** le moyeu (5) de roue présente un matériau de fonte, de fonte d'acier ou d'acier transformé avec une résistance à la traction de haute qualité supérieure à 170 N/mm².

3. Disque de frein à durcissement bainitique selon une ou plusieurs de revendications 1 - 2, **caractérisé en ce que** le corps (1) est exécuté et, à une température inférieure étagée de la trempe bainitique, est durci par bainitique de façon que la durée de vie du corps (1) soit au moins aussi longue ou plus longue que la durée de vie du moyeu (5) de roue.

4. Disque de frein à durcissement bainitique selon la revendication 3 **caractérisé en ce que** la durée d'utilisation du disque est en comparaison à l'usure moyenne est aussi longue ou plus longue que la durée de vie du véhicule.

5. Procédé de fabrication d'un disque de frein à durcissement bainitique selon une ou plusieurs des revendications 1 - 4, **caractérisé en ce qu'**une ébauche de disque (12) annulaire en fonte avec graphique lamellaire est moulée par un procédé de liaison de fusion provenant d'une fusion dans un moule (11) et qu'une pièce moulée composite est fabriquée par adjonction par coulée d'un moyeu (5) de roue composé de fonte avec graphite sphéroïdal qui, après une préparation grossière d'usinage par chariotage et équilibrage, est soumise à un durcissement bainitique et après le durcissement, à une retouche avant tout par rectification.

6. Procédé de fabrication d'un disque de frein à durcissement bainitique selon une ou plusieurs des revendications 1 - 4, **caractérisé en ce que** par un procédé de liaison de fusion, un moyen (5) de roue fabriqué en tôle d'acier est placé dans un moule (11) et par adjonction par coulée d'une ébauche de disque (12) annulaire composée de fonte avec graphite lamellaire, une ébauche de disque de frein est fabriquée qui après une préparation d'usinage par chariotage et équilibrage, est soumise à un durcissement bainitique et après le durcissement, à une retouche avant tout par rectification.

7. Procédé de fabrication d'un disque de frein à durcissement bainitique selon une ou plusieurs des revendications 1 - 4, **caractérisé en ce qu'**une ébauche de disque (12) moulée en fonte avec graphique lamellaire est soumise à un durcissement bainitique après un traitement préparatif par chariotage et équilibrage et par la suite, partiellement chauffé dans la région de connexion du moyeu (5) de roue, placé dans un moule (11) et moulée par adjonction par coulée d'un moyeu (5) de roue composé de fonte non durcie avec graphite sphéroïdal.

8. Procédé de fabrication d'un disque de frein à durcissement bainitique par fusion selon une ou plusieurs des revendications 5 - 7, **caractérisé en ce que** la surface de contact du moyeu (5) de roue placé dans le moule ou de l'ébauche de disque (12) préparée qui forme la zone de liaison (15) dans la région de connexion entre le moyeu (5) de roue et la base du disque (3), est réglée à une température qui se situe au moins à 10°C au-dessus de la température du solidus, la zone de liaison (15) libre pour adjonction par coulée étant recouvert auparavant d'un mélange de matières non métalliques composé d'une liaison réductrice et borurée de protection contre l'oxydation.

## Claims

1. Bainitically hardened brake disk with at least one ring-shaped cast disk manufactured by casting, with an external radial brake ring section which is in contact with brake shoes, which for the purpose of braking are arranged together with a motor vehicle wheel on a wheel hub, **characterised in that** the brake disk has a continuous bainitically hardened brake disk body (1) made of cast iron with lamellar graphite (AGI), whereby the brake disk is designed as one piece and is connected by composite casting to the brake disk body (1) with the wheel hub (5), forming a continuous material junction point (15) in the connection area of the wheel hub (5) with the brake disk foot (3).

2. Bainitically hardened brake disk according to Claim 1, **characterised in that** the wheel hub (5) is of a material made of cast iron, cast steel, or worked steel, with a tensile strength greater than 170 N/mm2.

3. Bainitically hardened brake disk according to one or more of Claims 1-2, **characterised in that** the brake disk body (1) is designed and bainitically hardened under an intermediate stage tempering temperature in such a way that the service life of the brake disk body (1) is at least as great or greater than the service life of the wheel hub (5).

4. Bainitically hardened brake disk according to Claim 3, **characterised in that** the useful life of the brake disk, with comparatively uniform wear, is the same or greater than the service life of the motor vehicle.

5. Method for the manufacture of a bainitically hardened brake disk according to one or more of Claims 1-4, **characterised in that**, in a composite casting process, from one melt in a casting mould (11), a ring-disk shaped disk blank (12) of cast iron with lamellar graphite is cast, and, by casting on a wheel hub (5) consisting of cast iron with spheroidal graphite, a composite cast item is manufactured, which under metal-cutting rough preparation by turning and balancing, is subjected to a bainitic hardening, and after the hardening is subjected to reworking, in particular by grinding.

6. Method for the manufacture of a bainitically hardened brake disk according to one or more of Claims 1-4, **characterised in that**, in a composite casting process, a wheel hub (5) manufactured from sheet steel is laid in a casting mould (11) and, by casting on of a ring-disk shaped disk blank (12), consisting of cast iron with lamellar graphite, a brake disk blank is manufactured, which, after metal-cutting preparation by turning and balancing, is subjected to bainitic hardening, and is subsequently subjected to reworking.

7. Method for the manufacture of a bainitically hardened brake disk according to one or more of Claims 1-4, **characterised in that** a disk blank (12), cast from cast iron with lamellar graphite, after preparatory working by turning and balancing, is subjected to bainitic hardening and then partially heated in the connection area of the wheel hub (5), laid in a casting mould (11), and cast in the composite casting process by the casting on of a wheel hub (5) consisting of unhardened cast iron with spheroidal graphite.

8. Method for the manufacture of a bainitically hardened brake disk according to one or more of Claims 5-7, **characterised in that** the contact surface of the wheel hub (5) laid in the casting mould (11) or of the prepared disk blank (12), which forms the junction point (15) in the connection area between the wheel hub (5) and the brake disk foot (3), is brought before the casting to a temperature which is at least 10°C above the solidus temperature, whereby the junction point (15) which is lying free for the casting is first coated with a non-metallic substance mixture of a reducing compound containing boron and protected against oxidation.
